# EUROPÄISCHE PATENTSCHRIFT

(11) **EP 1 369 635 B1**
(45) Veröffentlichungstag und Bekanntmachung des Hinweises auf die Patenterteilung: **19.07.2006**
(21) Anmeldenummer: 02450130.6
(22) Anmeldetag: 31.05.2002
(51) Int. Cl.: F16L 47/00

(54) **Formstück zur Führung eines Strömungsmediums, insbesondere für Wasserleitungsinstallationen**
Pipe fitting for transporting a fluid, particularly for water piping installations
Raccord de tuyauterie pour le transport de fluides, notamment pour système de conduite d'eau

(43) Veröffentlichungstag der Anmeldung: 10.12.2003
(73) Patentinhaber: KE-KELIT Kunststoffwerk Gesellschaft m.b.H., A-4017 Linz (AT)
(72) Erfinder: Schnabellehner, Hannes, 4040 Linz (AT)
(74) Vertreter: Hübscher, Helmut

(56) Entgegenhaltungen:
- EP-A- 0 123 195
- EP-A- 0 456 236
- US-A- 4 498 826
- US-A- 5 152 557

## Beschreibung

Die Erfindung bezieht sich auf ein Formstück zur Führung eines Strömungsmediums, insbesondere für Wasserleitungsinstallationen, bestehend aus einem hohlen Formkörper aus Kunststoff und aus wenigstens einem in den Formkörper eingegossenen Kunststoffeinsatz mit einem Innengewinde, wobei der Kunststoffeinsatz im Bereich des Innengewindes einen ihn umfassenden, zwischen Formkörper und Kunststoffeinsatz gegenüber dem Strömungsmedium eingeschlossenen, metallischen Stützring aufweist.

Um beispielsweise eine Armatur mit einer Wasserleitung aus Kunststoffrohren zu verbinden, werden Formstücke verwendet, die aus einem Formkörper aus Kunststoff mit einem eingegossenen Metalleinsatz für ein Innengewinde bestehen, so daß einerseits die Kunststoffrohre mit dem Formkörper verschweißt und anderseits die Armatur mit dem Formstück verschraubt werden kann. Der Metalleinsatz, üblicherweise ein Messingteil, ist zwar aufgrund seiner Festigkeit geeignet, die beim Einschrauben eines Gewindeansatzes der Armatur zufolge einer konischen Gewindeausbildung oder eines Einsatzes von Dichtmitteln im Gewindebereich unter Umständen auftretenden, vergleichsweise großen radialen Belastungen aufzunehmen, doch bringt die Korrosionsanfälligkeit der dem Leitungswasser ausgesetzten Metalleinsätze die Gefahr von Spannungsrissen mit zunehmender Einsatzdauer mit sich, so daß aufgrund solcher Spannungsrißkorrosionen mit einem Undichtwerden der Schraubverbindungen gerechnet werden muß. Aus diesem Grunde besteht das Bestreben, auch im Bereich des Innengewindes der Formstücke Kunststoff einzusetzen.
Die hiefür geeigneten, hochfesten Kunststoffe machen aber Schwierigkeiten beim Verschweißen mit den weiterführenden Kunststoffrohren, so daß vorgeschlagen wurde, entweder den hohlen Formkörper mit dem Innengewinde aus hochfestem Kunststoff zu fertigen und mit einer Anschlußbuchse aus schweißbarem Kunststoff für die weiterführenden Kunststoffrohre zu versehen (EP 0 611 276 B1) oder in einen Formkörper aus verschweißbarem Kunststoff einen Gewindeeinsatz aus hochfestem Kunststoff einzubetten (EP 0 313 543 B1). In beiden Fällen bringt die Anwendung und Verarbeitung hochfester Kunststoffe einen erhöhten Aufwand mit sich, wobei sich gezeigt hat, daß es kaum möglich ist, zwischen diesen unterschiedlichen Kunststoffen eine dauerhaft dichte Verbindung herzustellen. Zur Erhöhung der Festigkeit eines derartigen Formstückes ist es bekannt (EP 0 456 236 A2), den Kunststoffeinsatz im Bereich des Innengewindes mit einem das Innengewinde umfassenden, zwischen Formkörper und Kunststoffeinsatz gegenüber dem Strömungsmedium eingeschlossenen, metallischen Stützring zu versehen. Eine dauerhaft dichte Verbindung zwischen Formkörper und Kunststoffeinsatz kann damit nicht gewährleistet werden.

Der Erfindung liegt somit die Aufgabe zugrunde, ein Formstück zur Führung eines Strömungsmediums, insbesondere für Wasserleitungsinstallationen, der eingangs geschilderten Art so auszugestalten, daß unter vergleichsweise einfachen Herstellungsbedingungen für die Formstücke mit einer dauerhaft dichten Schraubverbindung gerechnet werden kann, ohne Schweißverbindungen mit weiterführenden Kunststoffleitungen zu gefährden.

Die Erfindung löst die gestellte Aufgabe dadurch, daß der Kunststoffeinsatz und der Formkörper aus dem gleichen Kunststoff bestehen.

Dadurch, daß der Kunststoffeinsatz und der Formkörper aus dem gleichen Kunststoff bestehen, ergibt sich in einfacher Weise eine dichte Verbindung zwischen Kunststoffeinsatz und Formkörper, weil in diesem Fall im Übergangsbereich vom Kunststoffeinsatz auf den hohlen Formkörper mit gleichen Werkstoffeigenschaften, insbesondere hinsichtlich des Dehnungsverhaltens, gerechnet werden kann. Um trotzdem für den Kunststoffeinsatz höhere Festigkeiten zu erreichen, kann der Kunststoffeinsatz durch pulver- oder faserartige Einlagerungen verstärkt werden.

Da der den Kunststoffeinsatz im Bereich des Innengewindes umfassende, metallische Stützring die radiale Belastung des Kunststoffeinsatzes aufnehmen kann, kann der Kunststoffeinsatz eine entsprechend geringere Festigkeit aufweisen, so daß der sonst mit einem hochfesten Kunststoffeinsatz verbundene Aufwand entfällt. Im Gegensatz zu hochfesten Kunststoffen bringt die Verbindung zwischen dem metallischen Stützring und den üblicherweise für solche Formstücke eingesetzten Kunststoffen keine Dichtungsschwierigkeiten mit sich. Da außerdem der metallische Stützring gegenüber dem Strömungsmedium abgeschlossen ist, kann die Gefahr von Spannungsrißkorrosionen ausgeschlossen werden. Mit der erfindungsgemäßen Ausbildung solcher Formstücke können somit unter einer Umgehung hochfester Kunststoffe Metallteile zur Ausbildung des Innengewindes durch Kunststoffeinsätze ersetzt werden, ohne eine Überlastung dieser für sich nicht ausreichend festen Kunststoffeinsätze befürchten zu müssen.

Zur Verbesserung der Verbindung zwischen dem metallischen Stützring einerseits und dem Formkörper aus Kunststoff bzw. dem Kunststoffeinsatz anderseits kann der metallische Stützring Umfangsrippen aufweisen. Um nachteilige Einflüsse beispielsweise von Kupferionen auf den Kunststoff des Formkörpers bzw. des Kunststoffeinsatzes, z. B. Polypropylen, beim Einsatz von Stützringen aus Messing zu vermeiden, sind diese Stützringe gegebenenfalls in an sich bekannter Weise mit einer Chrom- oder Nickelschicht zu überziehen.

Zur Herstellung von erfindungsgemäßen Formstücken kann zunächst der Kunststoffeinsatz mit dem Innengewinde gespritzt werden, wobei vorteilhaft der metallische Stützring Teil der Form ist, so daß der mit dem Stützring der Form entnommene Kunststoffeinsatz als Einlegeteil in das Formwerkzeug für das Formstück eingesetzt und mit Kunststoff umspritzt werden kann. Da der metallische Stützring in diesem Fall vollständig mit Kunststoff umspritzt ist, kann jede Korrosionsgefahr durch das Strömungsmedium ausgeschlossen werden.

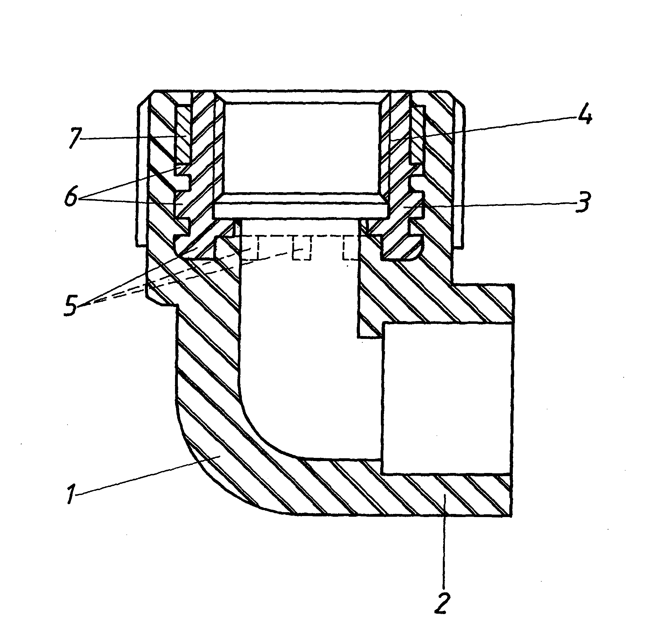

In der Zeichnung ist der Erfindungsgegenstand beispielsweise dargestellt, und zwar wird ein erfindungsgemäßes Formstück zur Führung eines Strömungsmediums in einem vereinfachten Axialschnitt gezeigt.

Gemäß dem dargestellten Ausführungsbeispiel bildet der hohle Formkörper 1 des Formstückes ein Anschlußknie zum Verbinden einer Armatur mit einem Wasserleitungsrohr aus Kunststoff, das in einen muffenartigen Anschlußteil 2 des Formstückes eingesteckt und mit diesem Anschlußstück verschweißt wird. Zum Anschluß einer Armatur od. dgl. ist am anderen Ende des knieförmigen Formkörpers 1 ein Kunststoffeinsatz 3 mit einem Innengewinde 4 vorgesehen. Dieser hülsenförmige Kunststoffeinsatz 3 weist auf der dem Formkörperknie zugewandten Stirnseite axial vorstehende Rippen 5 auf, die eine Verdrehsicherung des Kunststoffeinsatzes 3 innerhalb des Formkörpers 1 sicherstellen. Über Umfangsrippen 6 wird der Kunststoffeinsatz 3 in axialer Richtung festgehalten. Im Bereich des Innengewindes wird der Kunststoffeinsatz 3 durch einen metallischen Stützring 7 umschlossen, der die beim Einschrauben eines Gewindeansatzes einer Armatur in das Innengewinde 4 auf den Kunststoffeinsatz 3 ausgeübten Radialkräfte aufnimmt, so daß die Festigkeit des Kunststoffeinsatzes 3 hiefür nicht ausgelegt zu werden braucht. Dies bedeutet, daß für den Formkörper 1 und den Kunststoffeinsatz 3 ein gleichartiger oder übereinstimmender Kunststoff eingesetzt werden kann, der eine innige Verbindung zwischen dem Kunststoffeinsatz 3 und dem Formkörper 1 erlaubt. Damit kann die Dichtheit zwischen dem Kunststoffeinsatz 3 und dem Formkörper 1 gegenüber dem Leitungswasser unabhängig von der Dichtheit der Verbindung zwischen dem metallischen Stützring 7 einerseits und dem Kunststoffeinsatz 3 bzw. dem Formkörper 1 anderseits gewährleistet werden, obwohl sich auch zwischen dem Stützring 7 und den anschließenden Kunststoffteilen eine gute Dichtung erreichen läßt. Die dichte Verbindung zwischen Kunststoffeinsatz 3 und Formkörper 1 bewahrt den zwischen dem Kunststoffeinsatz 3 und dem Formkörper 1 eingeschlossenen, metallischen Stützring 7 vor einem Korrosionsangriff durch das Leitungswasser, was Spannungsrißkorrosionen ausschließt und eine dauerhafte Festigkeit des metallischen Stützringes 7 mit sich bringt.

Die Herstellung eines solchen Formstückes ist vergleichsweise einfach, weil zunächst der Kunststoffeinsatz 3 gespritzt werden kann. Der metallische Stützring 7 kann dabei spritztechnisch mit dem Kunststoffeinstz 3 verbunden, aber auch auf den fertigen Kunststoffeinsatz 3 aufgesteckt werden. Der mit dem Stützring 7 versehene Kunststoffeinsatz 3 wird dann in die Form für den Formkörper 1 eingelegt und mit dem Kunststoff des Formkörpers 1 umspritzt, wobei der metallische Stützring 7 zwischen dem Kunststoffeinsatz 3 und dem Formkörper 1 eingeschlossen wird.

Die Erfindung ist selbstverständlich nicht auf das dargestellte Ausführungsbeispiel beschränkt. So könnte das Formstück unterschiedliche Gestalt aufweisen, weil es ja lediglich darum geht in den eine Strömungsführung bildenden Formkörper 1 einen Kunststoffeinsatz mit einem Innengewinde vorzusehen. Obwohl sich solche Formstücke insbesondere für Wasserleitungsinstallationen anbieten, ist deren Anwendungsbereich nicht auf dieses Gebiet beschränkt. Erfindungsgemäße Formstücke lassen sich überall dort einsetzen, wo es gilt, Formstücke zur Führung von Strömungsmedien zur Verfügung zu stellen, gegenüber denen metallische Gewindeeinsätze korrosionsanfällig sind.

## Patentansprüche

1. Formstück zur Führung eines Strömungsmediums, insbesondere für Wasserleitungsinstallationen, bestehend aus einem hohlen Formkörper (1) aus Kunststoff und aus wenigstens einem in den Formkörper (1) eingegossenen Kunststoffeinsatz (3) mit einem Innengewinde (4), wobei der Kunststoffeinsatz (3) im Bereich des Innengewindes (4) einen ihn umfassenden, zwischen Formkörper (1) und Kunststoffeinsatz (3) gegenüber dem Strömungsmedium eingeschlossenen, metallischen Stützring (7) aufweist, **dadurch gekennzeichnet, daß** der Kunststoffeinsatz (3) und der Formkörper (1) aus dem gleichen Kunststoff bestehen.

2. Formstück nach Anspruch 1, **dadurch gekennzeichnet, daß** der metallische Stützring (7) Umfangsrippen aufweiset.

## Claims

1. Mould member for guiding a flow medium, in particular for water pipeline installations, consisting of a hollow mould body (1) made from plastic and at least one plastic insert (3) cast in the mould member (1) with an inner thread (4) wherein the plastic insert (3) has in the region of the inner thread (4) a metal reinforcement ring (7) surrounding it and enclosed in relation to the flow medium between mould member (1) and plastic insert (3), **characterised in that** the plastic insert (3) and the mould body (1) consist of the same plastic.

2. Mould member according to claim 1, **characterised in that** the metal reinforcement ring (7) has peripheral ribs.

## Revendications

1. Pièce de forme pour le guidage d'un fluide en écoulement, en particulier pour des installations de conduites d'eau, composée d'un corps de forme (1) creux en matière synthétique et d'au moins un insert en matière synthétique (3), coulé dans le corps de forme (1) et muni de filetage intérieur (4), l'insert en matière synthétique (3) présentant, dans la zone du filetage intérieur (4), une bague d'appui (7) métallique l'entourant, incluse entre le corps de forme (1) et l'insert en matière synthétique (3) par rapport au fluide en écoulement, **caractérisé en ce que** l'insert en matière synthétique (3) et le corps de forme (1) sont formés de la même matière synthétique.

2. Pièce de forme selon la revendication 1, **caractérisée en ce que** la bague d'appui (7) métallique présente des nervures périphériques.
